# FASCICULE DE BREVET EUROPEEN

(11) **EP 1 162 882 B1**
(45) Date de publication et mention de la délivrance du brevet: **18.02.2004**
(21) Numéro de dépôt: 00910981.0
(22) Date de dépôt: 17.03.2000
(51) Int. Cl.: A01N 25/24

(54) **UTILISATION DE MATRICES POLYMERES RETICULEES EN TANT QU'AGENTS ANTI-LESSIVAGE**
VERWENDUNG VON VERNETZTEN POLYMERMATRIZEN ALS ANTI-ABWASCHMITTEL
USE OF CROSSLINKED POLYMERS AS ANTI-LEACHING AGENTS

(30) Priorité: 19.03.1999 FR 9903454
(43) Date de publication de la demande: 19.12.2001
(73) Titulaire: RHODIA CHIMIE, 92408 Courbevoie Cédex (FR)
(72) Inventeur: BERGERON, Vance, F-69005 Lyon (FR); BONNET-GONNET, Cécile, F-75011 Paris (FR); CASTAING, Jean-Christophe, F-75019 Paris (FR); GUERIN, Gilles, F-95600 Eaubonne (FR)
(74) Mandataire: Wattremez, Catherine
(86) Numéro de dépôt international: PCT/FR2000/000661
(87) Numéro de publication internationale: WO 2000/056147

(56) Documents cités:
- CA-A- 761 872
- DD-A- 281 109
- US-A- 4 110 431
- US-A- 4 123 249
- US-A- 5 077 314

## Description

La présente invention a pour objet l'utilisation, dans des bouillies de pulvérisation aqueuses comprenant une formulation phytosanitaire, d'un agent anti-lessivage qui comprend au moins un polymère ou copolymère polyhydroxylé et/ou polycarboxylé, au moins un agent réticulant comprenant un métal.

La présente invention a plus particulièrement trait au domaine des formulations phytosanitaires, comprenant des pesticides ou des agents contrôlant la croissance des plantes.

En outre, la présente invention concerne le domaine des formulations phytosanitaires destinées à être appliquées sur les plantes à traiter, sous la forme d'une solution, dispersion ou émulsion dans un milieu aqueux. Notons que pour des raisons de simplification de l'exposé, il ne sera fait référence dans la suite de la description, qu'à des solutions aqueuses, sachant que ce terme englobe les variantes précitées.

Les formulations phytosanitaires mises en oeuvre sous forme de solution aqueuse sont classiquement pulvérisées sur la plante à traiter. L'une des principales difficultés que l'on rencontre avec ce mode de mise en oeuvre, réside dans le fait qu'il est difficile de maintenir la matière active sur la plante. En effet, dès la première pluie ou rosée du matin, le film déposé sur la plante se regonfle en présence d'eau et la matière active est entraînée avec l'eau, ce qui diminue considérablement sont efficacité.

Le document CA 761872 décrit une composition phytosanitaire sous forme de gel, de forte viscosité, adhérent à la surface des plantes sur lesquelles elle est appliquée. Le gel est préparé partir de carboxyméthyl de cellulose et d'acétate d'aluminium, dans des proportions telles que la viscosité est très importante avant application sur les plantes. Cette solution nécessite des appareils de pompage et de pulvérisation puissants, ce qui en limite l'utilité. Le document DD 281109 décrit également une composition comprenant de la carboxyméthylcellulose et un sel d'aluminium, sous forme solide ou sous forme de gel, qui ne convient pas à un pompage ou une pulvérisation. Le document US 5,077,314 décrit également une composition phytosanitaire sous forme de gel, de viscosité très élevée, qui ne peut pas être pulvérisée sur une plante.

Le document US 4,123,249 décrit une composition phytosanitaire comprenant un herbicide, emprisonné par le produit de réticulation entre un polymère hydrosoluble d'acide acrylique ou d'acrylamide avec un sel d'aluminium. La réticulation se produit en milieu aqueux, avant application sur les plantes. Les compositions selon se document ne permettent pas à la fois une application aisée et un maintien de la matière active sur la plante.

La présente invention a pour objet l'utilisation d'une bouillie aqueuse de pulvérisation comprenant une formulation phytosanitaire et un agent anti-lessivage particulier. Ce dernier se présente, lors de l'utilisation de la bouillie, sous la forme d'une solution ou d'une dispersion peu visqueuse. Par conséquent, la bouillie résultante peut être facilement pompée et pulvérisée. En outre, l'agent anti-lessivage forme, au moment de son séchage sur la plante traitée, un gel limitant considérablement le lessivage de la matière active appliquée. Il est à noter que de manière tout à fait avantageuse, le gel ne se forme pas lors de la préparation ou de l'utilisation de la bouillie, ni lors de la préparation de la formulation phytosanitaire si elle comprend l'agent anti-lessivage, mais seulement lors du séchage de la bouillie sur la plante traitée.

Ainsi, la présente invention consiste en l'utilisation dans une bouillie aqueuse de pulvérisation comprenant une formulation phytosanitaire, d'un agent anti-lessivage comprenant :
- au moins un polymère ou copolymère polyhydroxylé et/ou polycarboxylé,
- au moins un agent réticulant comprenant au moins un métal choisi parmi les colonnes IVA, IB et IIIB de la classification périodique des éléments,
le rapport pondéral de l'agent réticulant et du polymère ou copolymère est compris entre 0,005 et 2 ; et
ledit agent anti-lessivage se présentant, dans la bouillie aqueuse de pulvérisation, sous la forme d'une solution ou d'une dispersion aqueuse présentant une concentration en polymère ou copolymère telle, que la viscosité de l'agent anti-lessivage est inférieure ou égale à 10 fois la viscosité d'une solution aqueuse en polymère ou copolymère exempte d'agent réticulant, présentant la même concentration.

L'agent anti-lessivage présent dans la bouillie de pulvérisation, une fois appliqué sur la plante, et séché, forme un film réticulé qui se regonfle peu en présence d'eau. Ainsi, le film comprenant la matière active conserve une meilleure cohésion sur la surface où il s'est formé, augmentant de ce fait considérablement l'efficacité de la matière active.

L'agent anti-lessivage selon l'invention présente en outre d'autres avantages très importants, comme celui d'éviter les pertes en matières actives lors de la pulvérisation. En effet, l'agent anti-lessivage diminue les phénomènes d'entraînement par le vent des gouttelettes pulvérisées (anti-drift), de même que le rebond de celles-ci lorsqu'elles entrent en contact avec la surface, hydrophobe, de la plante à traiter.

Notons de plus, que l'agent anti-lessivage peut se présenter sous différentes formes. Ainsi, il peut se trouver sous forme solide, ou encore sous la forme d'une dispersion dans un composé qui n'est pas un solvant du polymère ou copolymère, tel que les huiles.

De plus, l'agent anti-lessivage peut être mis en oeuvre en tant qu'adjuvant de formulation phytosanitaire. En d'autres termes, l'agent anti-lessivage est mélangé à la formulation phytosanitaire au moment de l'utilisation de cette dernière ; l'ensemble donnant la bouillie aqueuse de pulvérisation.

Il est de même possible de mettre en oeuvre des formulations phytosanitaires comprenant l'agent anti-lessivage. Dans ce cas, on dit que l'agent anti-lessivage est employé en tant qu'élément constitutif de la formulation phytosanitaire.

Il est à remarquer que dans les conditions décrites, l'agent anti-lessivage et éventuellement la formulation phytosanitaire qui le renferme sont stables au stockage et l'on ne constate pas d'apparition de gel non manipulable. De plus, la bouillie aqueuse comprenant la formulation phytosanitaire et l'agent anti-lessivage est stable elle aussi.

Mais d'autres avantages et caractéristiques de la présente invention apparaîtront plus clairement à la lecture de la description qui va suivre.

L'agent anti-lessivage va tout d'abord être décrit en détail.

Ainsi que cela a été indiqué auparavant, l'agent anti-lessivage comprend au moins un polymère ou copolymère polyhydroxylé et/ou polycarboxylé.

De préférence, le polymère ou copolymère se présente sous une forme soluble dans les milieux aqueux.

Selon une première variante, le polymère ou copolymère polyhydroxylé est choisi parmi les polysaccharides d'origine animale, végétale ou bactérienne, les dérivés de la cellulose, ou encore l'alcool polyvinylique, les alcools polyphénoliques, ou leurs dérivés, ainsi que les dérivés polyoxyalkylénés du glycol.

Les polysaccharides peuvent être employés sous forme native ou modifiée chimiquement de manière à leur conférer un caractère ionique, non ionique et/ou hydrophobe différent de la forme native.

A titre d'exemples de polysaccharides, on peut citer sans se limiter, les alginates, les galactomannanes comme la gomme guar, la gomme caroube, la gomme de Tara, la gomme de cassia, la gomme de Karaya, les carraghénanes, les dérivés de la chitine comme le chitosan, les amidons, les glucomannanes, le dextran, la gomme arabique, l'amidon soluble et ses dérivés non ioniques (cationique). Conviennent aussi les dérivés de ces composés alkylés.

En tant que dérivés de la cellulose pouvant entrer dans le cadre de la présente invention, on peut mentionner notamment les dérivés de la cellulose comme les hydroxyéthers de cellulose, la méthylcellulose et ses dérivés, l'hydroxypropylméthylcellulose, l'hydroxybutylméthylcellulose, la carboxyméthylcellulose, l'éthylméthylcellulose, l'éthylcellulose, l'hydroxylcellulose, l'hydroxyéthylcellulose, ainsi que, d'une manière générale, les autres dérivés hydroxyalkylés de la cellulose.

En tant que dérivés convenables du guar, on peut citer les composés issus de réaction d'éthérification et/ou d'estérification, comme les hydroxyalkyl guars (avec le radical alkyle comprenant 2 à 4 atomes de carbone, linéaire ou ramifié) comme l'hydroxypropyl guar, l'hydroxybutyl guar ; comme le carboxyméthyl guar ; comme les carboxyméthyl hydroxyalkyl guars (avec le radical alkyle comprenant 2 à 4 atomes de carbone, linéaire ou ramifié). Conviennent de même les composés cationiques du guar, portant des groupements amines quaternaires. Enfin, les composés alkylés du guar et des dérivés mentionnés ci-dessus peuvent être mis en oeuvre dans l'invention.

Comme biogommes pouvant être utilisées dans l'agent anti-lessivage, on peut citer notamment les polysaccharides obtenus par fermentation sous l'action de bactéries ou de champignons appartenant par exemple Xanthomonas, au genre Arthrobacter, au genre Azobacter, au genre Agrobacter, au genre Alcaligènes, au genre Rhizobium, au genre Sclerotium, au genre Corticium, au genre Sclerotinia.

A titre d'exemple de biogommes, on peut citer plus particulièrement la gomme xanthane, les scléroglucanes, les succinoglycanes.

A titre de polymères ou copolymères polyhydroxylés, et comme indiqué auparavant, conviennent l'alcool polyvinylique, les alcools polyphénoliques, ou leurs dérivés.

Parmi les dérivés possibles, notons les (co)polymères polyéthérifiés, tels que ceux dont la partie éther est un radical alkyle en C₁-C₁₈, ou aryle en C₆-C₁₈, alkylaryle ou encore arylalkyle ; les parties alkyle et aryle étant définies ci-dessus.

Peuvent également convenir à titre de dérivés, des (co)polymères portant au moins un radical ionique (anionique, cationique, zwittérionique, amphotères). A titre de radical anionique, on peut citer sans intention de se limiter, les radicaux du type sulfonate, sulfate, carboxylate, phosphate, phosphonate ; à titre d'exemple de radical cationique, on peut citer les radicaux du type ammonium quaternaires comme -N(R₃)⁺ avec R, identiques ou différents, représentant un atome d'hydrogène, un radical alkyle en C₁-C₆ ; les radicaux zwittérioniques et amphotères correspondant à la combinaison des deux types de radicaux précités.

Il est fait remarquer que les (co)polymères de type polyphénoliques sont des substances naturelles, qui peuvent, notamment, être extraites de certaines plantes comme les caféiers, les théiers.

Un autre type de polymère ou copolymère polyhydroxylé correspond aux dérivés polyoxyalkylénés du glycol, la partie oxyde d'alkylène correspondant à l'oxyde d'éthylène, l'oxyde de propylène ou leurs mélanges. Dans le cas où l'oxyde d'éthylène et l'oxyde de propylène sont présents, leurs répartition peut être statistique ou bloc. De préférence, on met en oeuvre un dérivé polyoxyéthyléné du glycol.

Selon une variante préférée de l'invention, le polymère ou copolymère polyhydroxylé est choisi parmi la gomme de guar ainsi que ses dérivés non ioniques, anioniques, cationiques, amphotériques. Plus particulièrement, on met en oeuvre le guar, éventuellement alkylé, les hydroxyalkyl guars (avec le radical alkyle comprenant 2 à 4 atomes de carbone, linéaire ou ramifié) ; le carboxyméthyl guar ; les carboxyméthyl hydroxyalkyl guars (avec le radical alkyle comprenant 2 à 4 atomes de carbone, linéaire ou ramifié) et leurs dérivés alkylés. De même la cellulose et ses dérivés comme notamment la carboxyméthyl-cellulose, sont des polymères ou copolymères polyhydroxylés préférés.

En ce qui concerne les polymères ou copolymères polycarboxylés, conviennent ceux obtenus à partir :
□ d'au moins un monomère saturé ou insaturé, comprenant 3 à 10 atomes de carbone et comprenant un ou plusieurs groupements carboxyliques se trouvant sous une forme d'acide, de sels de métal alcalin,
□ éventuellement combiné à au moins un monomère hydrocarboné portant une ou plusieurs insaturations éthyléniques ; ou
□ éventuellement combiné à au moins un monomère de type oxyde d'alkylène.

A titre de monomère saturé ou insaturé comprenant un ou plusieurs groupements carboxyliques et comprenant 3 à 10 atomes de carbone, on peut citer les mono- ou diacides, ainsi que leurs dérivés sous forme de sels de métaux alcalin, alcalino-terreux, d'ammonium (type N(R)₄⁺, avec R représentant l'hydrogène ou un radical alkyle en C₁-C₄).

Par exemple, on peut citer l'acide acrylique, l'acide méthacrylique, l'acide itaconique, l'acide maléique, l'anhydride maléique, l'acide fumarique.

Les acides aminés ou leurs sels peuvent de même convenir à la réalisation de l'invention, comme l'acide aspartique.

En ce qui concerne le monomère hydrocarboné, on peut mentionner sans intention de s'y limiter des monomères hydrocarbonés en C₂-C₁₂, comprenant ou non un radical aryle, et présentant en outre au moins une insaturation éthylénique. Conviennent entre autres le butadiène, l'isobutylène, le diisobutylène, le styrène, le vinylstyrène, l'alphaméthylstyrène, le vinyltoluène.

Pour ce qui a trait au monomère de type oxyde d'alkylène, on peut citer l'oxyde d'éthylène, l'oxyde de propylène ou leurs mélanges.

L'agent anti-lessivage peut comprendre un ou plusieurs des polymères ou copolymères qui viennent d'être décrits.

En outre, le polymère ou copolymère mis en oeuvre dans l'agent anti-lessivage présente plus particulièrement une masse moléculaire en poids comprise entre 104 et 5.106 g/mol. De préférence, la masse moléculaire du composé est comprise entre 5.10⁵ et 5.106 g/mol, et selon une variante plus particulière, entre 10⁶ et 5.10⁶ g/mol.

Ces masses sont mesurées soit par chromatographie par exclusion stérique, ou encore par diffusion quasi-élastique de la lumière.

L'agent anti-lessivage comprend en outre au moins un agent réticulant contenant au moins un métal choisi parmi les colonnes IVA, IB et IIIB de la classification périodique des éléments (la classification à laquelle il est fait référence est celle parue au supplément au Bulletin de la société chimique de France - n° 1 - de janvier 1966). Plus particulièrement, le bore n'est pas présent. Les métaux préférés sont le titane, le zirconium, le cuivre, l'aluminium. Ces métaux peuvent être mis en oeuvre seuls ou en combinaison.

L'agent réticulant entrant dans l'agent anti-lessivage se présente plus particulièrement sous la forme d'un composé hydrosoluble, hydrodispersable ou émulsionnable.

Selon une première possibilité, l'agent réticulant se trouve sous la forme de dérivés organiques choisis parmi les sels d'acides carboxyliques, aliphatiques, saturés ou non, linéaires ou ramifiés, comprenant 2 à 18 atomes de carbone, et comprenant éventuellement un ou plusieurs groupements hydroxyles.

Par exemple, les sels d'acide acétique, citrique, lactique, oléique, stéarique, myristoléique conviennent.

Une autre variante consiste à mettre en oeuvre l'agent réticulant sous la forme de chélates de β-dicétones ou de β-cétoesters aliphatiques comprenant 5 à 10 atomes de carbone, ou comprenant au moins un radical aromatique.

Parmi des composés convenables de ce type, on peut citer les chélates d'acétylacétone, d'acétylacétonate de méthyle, d'acétylacétonate d'éthyle, de benzoylacétone, de dibenzoylméthane, d'heptanoylbenzoylméthane, d'octanoyl benzoylméthane, d'isooctanoylbenzoylméthane, de nonanoylbenzoyl méthane, de stéaroylbenzoylméthane.

Selon une seconde possibilité, l'agent réticulant est mis en oeuvre sous la forme de dérivés minéraux choisis parmi les oxydes, hydroxydes ou leurs mélanges.

Notons que l'agent réticulant peut être mis en oeuvre sous une forme peu ou non soluble dans un milieu aqueux. Dans ce cas, il sera alors présent, lors de l'utilisation de l'agent anti-lessivage, sous la forme d'une dispersion, d'une émulsion ou d'une micro émulsion.

Dans un tel cas, et pour favoriser au mieux sa dispersion homogène au sein de la bouillie aqueuse de pulvérisation, l'agent réticulant est de préférence employé sous une forme finement divisée. Plus particulièrement la taille moyenne des particules est inférieure au micron et de préférence inférieure à 200 nm. Notons que le terme particules englobe non seulement des agents réticulant se trouvant sous une forme solide mais aussi sous une forme liquide, ou les deux.

Selon un mode de réalisation particulier de l'invention, l'agent réticulant, s'il n'est pas ou peu soluble dans un milieu aqueux, peut être mis en oeuvre avec un composé amphiphile (dispersant, tensioactif) approprié améliorant la répartition homogène dudit agent réticulant au moment de l'utilisation de l'agent anti-lessivage.

Parmi les agents réticulant convenant de manière très avantageuse à l'invention, on peut citer le lactate de zirconium, le citrate de zirconium, l'acétylacétonate de zirconium, l'acétate de zirconium, l'oxyde de titane, l'oxyde d'aluminium.

Le rapport pondéral de l'agent réticulant et du polymère ou copolymère est compris entre 0,005 et 2, de préférence entre 0,01 et 0,5.

Il est à noter que le choix des éléments constitutifs de l'agent anti-lessivage dépend du pH de la phase aqueuse de la bouillie de pulvérisation. De préférence, lesdits éléments sont choisis de telle sorte qu'ils ne forment pas un précipité dans les conditions de pH auxquelles ils sont soumis lors de la préparation, de l'utilisation dudit agent anti-lessivage.

Ainsi que cela a été indiqué auparavant, l'agent réticulant, dans la bouillie aqueuse de pulvérisation, se présente sous la forme d'une solution ou d'une dispersion aqueuse présentant une concentration en polymère ou copolymère telle, que la viscosité de l'agent anti-lessivage est inférieure ou égale à 10 fois la viscosité d'une solution aqueuse en polymère ou copolymère exempte d'agent réticulant, présentant la même concentration.

Dans ces conditions, et malgré la présence des deux éléments constitutifs de l'agent anti-lessivage, la bouillie de pulvérisation présente une viscosité rendant possible et simple, les opérations de pompage et de pulvérisation. En outre, la bouillie est stable.

Le solvant de la bouillie est de préférence l'eau. Cependant, on ne sortirait pas du cadre de la présente invention en remplaçant l'eau par un mélange alcool ou polyalcool et eau. Notons que la quantité en cet alcool ou polyalcool, s'il est présent, est telle que le polymère ou copolymère se trouve sous la forme d'une solution vraie.

La préparation de la bouillie peut avoir lieu de plusieurs manières.

Selon une première variante, la bouillie aqueuse de pulvérisation est obtenue en mélangeant la formulation phytosanitaire diluée, émulsionnée ou dispersée dans un milieu aqueux, à l'agent anti-lessivage se présentant sous une forme solide ou sous la forme d'une dispersion dans un composé qui n'est pas un solvant du polymère ou copolymère.

Selon cette première variante, la quantité d'eau dans la formulation phytosanitaire est telle que l'agent anti-lessivage se présente, dans la bouillie aqueuse de pulvérisation, sous la forme d'une solution ou d'une dispersion aqueuse présentant une concentration en polymère ou copolymère telle, que la viscosité de l'agent anti-lessivage est inférieure ou égale à 10 fois la viscosité d'une solution aqueuse en polymère ou copolymère exempte d'agent réticulant, présentant la même concentration.

Cette variante illustre une utilisation de l'agent anti-lessivage en tant qu'adjuvant (tank-mix). En effet, l'agent anti-lessivage est mélangé à la formulation phytosanitaire avant l'application de cette dernière sur la plante à traiter.

La formulation phytosanitaire, qui sera décrite plus bas, susceptible d'être mise en oeuvre peut être à l'origine sous la forme d'une poudre, de granulés, d'une émulsion, d'une solution ou d'une dispersion concentrés. Préalablement à la mise en contact avec l'agent anti-lessivage, la formulation phytosanitaire est diluée, émulsionnée ou dispersée, dans un milieu aqueux. De préférence, ledit milieu est de l'eau, mais il n'est pas exclu d'y adjoindre tout autre solvant ou dispersant usuel.

La quantité d'eau mélangée à la formulation phytosanitaire dépend de la concentration en matière active souhaitée pour l'application, ainsi que de la vérification de la condition mentionnée auparavant, à savoir le fait que l'agent anti-lessivage se présente, dans la bouillie aqueuse de pulvérisation sous la forme d'une solution ou d'une dispersion aqueuse présentant une concentration en (co)polymère telle, que la viscosité de l'agent anti-lessivage est inférieure ou égale à 10 fois la viscosité d'une solution aqueuse en (co)polymère exempte d'agent réticulant, présentant la même concentration.

Un premier mode de réalisation de cette première variante consiste à mettre en oeuvre l'agent anti-lessivage se présente sous la forme d'un solide, plus particulièrement sous la forme d'un solide divisé, comme une poudre par exemple.

L'obtention de l'agent anti-lessivage peut être réalisée, par exemple, en mélangeant simplement les deux éléments constitutifs de l'agent anti-lessivage.

Le second mode de réalisation de cette première variante consiste à mettre en oeuvre l'agent anti-lessivage sous la forme d'une dispersion dans un composé qui n'est pas un solvant du polymère ou copolymère

Plus particulièrement, le composé qui n'est pas un solvant du polymère ou copolymère est choisi parmi les huiles d'origine animale, végétale, ou des esters d'acides gras, ou encore des huiles hydrocarbonées.

Comme huiles d'origine animale, on peut citer en autres, les huiles de cachalot, dauphin, baleine, phoque, sardine, hareng, squale, foie de morue.

A titres d'exemples de sources d'origine végétale, on peut mentionner, entre autres, les huiles de colza, tournesol, arachide, olive, noix, maïs, soja, lin, chanvre, pépins de raisin, coprah, palme, graines de coton, babassu, jojoba, sésame, ricin, coriandre.

Il est également possible d'utiliser des esters d'acides gras, saturés ou non, comprenant, pour la partie acide, 6 à 40 atomes de carbone, éventuellement porteur d'un ou plusieurs groupements hydroxyles. Comme exemples d'acides gras on peut citer notamment les oléique, myristoléique, palmitoléique, pétrosélénique, érucique, linoléique, linolénique, ricinoléique. Conviennent notamment les esters méthyliques, éthylique et propylique de ces acides. On peut citer plus particulièrement les produits d'alcoolyse, plus précisément de méthanolyse, des huiles.

On peut de même mettre en oeuvre des huiles hydrocarbonées aliphatiques du type paraffine ou encore aromatiques (coupes pétrolières, ...)

La teneur en ce composé qui n'est pas un solvant du (co)polymère varie dans un large domaine. Cependant, avantageusement, elle représente au moins 50 % en poids de l'agent anti-lessivage ((co)polymère / agent réticulant).

Selon cette possibilité, le polymère ou copolymère peut se trouver sous la forme de particules solides.

L'obtention de l'agent anti-lessivage est réalisée de manière avantageuse en mélangeant simplement les divers éléments constitutifs dans les proportions requises.

Selon une deuxième variante, la bouillie aqueuse de pulvérisation est obtenue en mélangeant la formulation phytosanitaire à l'agent anti-lessivage ; ce dernier se présentant sous la forme d'une solution ou d'une dispersion aqueuse présentant une concentration en polymère ou copolymère telle, que la viscosité de l'agent anti-lessivage est inférieure ou égale à 10 fois la viscosité d'une solution aqueuse en polymère ou copolymère exempte d'agent réticulant, présentant la même concentration.

Selon cette deuxième variante, la formulation phytosanitaire se présentant sous la forme d'une poudre, de granulés, d'une émulsion, d'une solution ou d'une dispersion concentrés, est mélangée à une solution ou dispersion de l'agent anti-lessivage.

Rien n'empêche de mettre en oeuvre une formulation phytosanitaire qui a préalablement fait l'objet d'une dilution, émulsification, dispersion dans un milieu aqueux, dès l'instant que la concentration en matière active dans la bouillie de pulvérisation résultante est suffisante.

Selon cette variante, l'agent anti-lessivage présente une teneur en eau telle que les conditions de concentration en polymère et de viscosité indiquées auparavant soient satisfaites.

Cette variante illustre aussi une mise en oeuvre de l'agent anti-lessivage en tant qu'adjuvant (tank-mix).

Une troisième variante consiste à préparer la bouillie de pulvérisation en diluant, dispersant, émulsifiant dans un milieu aqueux, la formulation phytosanitaire exempte d'eau et comprenant l'agent anti-lessivage sous forme solide ou sous la forme d'une dispersion dans un composé qui n'est pas un solvant du polymère ou copolymère.

Selon cette troisième variante, la quantité d'eau est telle que l'agent anti-lessivage, dans la bouillie de pulvérisation, se présente sous la forme d'une solution ou d'une dispersion aqueuse présentant une concentration en polymère ou copolymère telle, que la viscosité de l'agent anti-lessivage est inférieure ou égale à 10 fois la viscosité d'une solution aqueuse en polymère ou copolymère exempte d'agent réticulant, présentant la même concentration.

Selon un mode de réalisation préféré de cette variante, la formulation phytosanitaire se présente sous une forme solide comprenant l'agent anti-lessivage sous forme solide.

La bouillie est donc obtenue en mélangeant à la formulation phytosanitaire comprenant l'agent anti-lessivage, une quantité suffisante d'un milieu aqueux, de préférence de l'eau, de telle sorte que les conditions de concentration en (co)polymère et de viscosité mentionnées plus haut soient vérifiées.

Cette variante est représentative d'une mise en oeuvre de l'agent anti-lessivage en tant qu'élément constitutif de la formulation phytosanitaire.

Une première méthode de préparation d'une telle formulation phytosanitaire consiste à mélanger tous ses éléments constitutifs sous la forme de solides.

Si nécessaire, la formulation solide obtenue, peut être mise en forme par granulation et /ou extrusion, pour donner des granulés.

Une deuxième méthode de préparation consiste à préparer une solution ou émulsion ou dispersion dans un milieu aqueux des divers éléments constitutifs de la formulation phytosanitaire, à l'exception de l'un des deux éléments constitutifs de l'agent anti-lessivage. De préférence, il s'agit du (co)polymère.

Puis on effectue un séchage de la formulation résultante.

Le séchage a lieu en mettant en oeuvre des moyens classiques. Mais de préférence, ledit séchage a lieu par atomisation, c'est-à-dire par pulvérisation de la suspension dans une atmosphère chaude (spray-drying). Cette atmosphère chaude est de manière avantageuse, de l'air.

L'atomisation peut être réalisée au moyen de tout pulvérisateur connu en soi, par exemple par une buse de pulvérisation du type pomme d'arrosoir ou autre. On peut également utiliser des atomiseurs dits à turbine.

Ce séchage peut avoir lieu à co-courant, à contre-courant.

Sur les diverses techniques de pulvérisation susceptibles d'être mises en oeuvre dans le présent procédé, on pourra se référer notamment à l'ouvrage de base de MASTERS intitulé "SPRAY-DRYING" (deuxième édition, 1976, Editions George Godwin - London).

On notera que l'on peut également mettre en oeuvre l'opération d'atomisation-séchage au moyen d'un réacteur "flash", par exemple du type décrit notamment dans les demandes de brevet français n° 2 257 326, 2 419 754 et 2 431 321.

A titre d'illustration, la température d'entrée des gaz lors du séchage est comprise entre 150 et 250°C. Bien évidemment, la température à laquelle est soumise la matière active durant le séchage, reste inférieure à la température de dégradation des éléments constitutifs de ladite formulation.

Une fois le séchage réalisée, la formulation obtenue est ensuite mélangée au (co)polymère, de manière classique.

Il est rappelé que les formulations phytosanitaires pouvant être mises en oeuvre comprennent au moins une matière active phytosanitaire. Celle-ci peut être choisie parmi les pesticides (herbicides, insecticides, fongicides, etc.) ou bien les additifs de contrôle de la croissance des plantes (oligo-élément).

Plus particulièrement, la teneur en matière active phytosanitaire est telle que le rapport pondéral de ladite matière active à l'agent anti-lessivage est de 0,1 à 50 %.

Les matières actives entrant dans la composition de telles formulations phytosanitaires peuvent être solides, hydrosolubles, hydrodispersables.

A titre d'exemple de matière actives convenables, on peut citer entre autres, l'Amétryne, le Diuron, le Linuron, le Chlortoluron, l'Isoproturon, le Nicosulfuron, le Metamitron, le Diazinon, l'Aclonifen, l'Atrazine, le Chlorothalonil, le Bromoxynil, le Bromoxynil heptanoate, le Bromoxynil octanoate, le Mancozeb, la Manèbe, le Zineb, la Phenmédipham, le Propanyl, la série des phénoxyphénoxy, la série des hétéroaryloxyphénoxy, le CMPP, le MCPA, le 2,4-D, la Simazine, les produits actifs de la série des imidazolinones, la famille des organophosphorés, avec notamment l'Azinphos-éthyl, l'Azinphos-méthyl, l'Alachlore, le Chlorpyriphos, le Diclofop-méthyl, le Fénoxaprop-p-éthyl, le Méthoxychlore, les pyréthroïdes naturels ou de synthèse, le Fenoxycarbe. Les dérivés aminophosphates et préférentiellement le glyphosate, le sulphosate, le glufosinate, ainsi que leurs sels organiques (les sels d'ammonium, substitués ou non, dont les amines secondaires ou primaires comme l'isopropylamine, la diméthylamine ou les diamines comme l'éthylènediamine, ou encore ses sels de sulfonium, en particulier le triméthylsulfonium) ou inorganiques (comme les sels de métaux alcalins comme le sodium ou le potassium).

La matière active peut de même être choisie parmi des composés minéraux du type oxychlorure métallique (comme le cuivre par exemple).

La présente invention convient de même à la préparation de formulations comprenant des éléments nutritifs, tels que notamment, des sels métalliques comme le zinc et le fer, par exemple, et préférentiellement de manganèse. Ces sels sont utilisés sous forme de chélates de type E.D.T.A. par exemple ou de sulfates.

Les éléments constitutifs des formulations phytosanitaires sont ceux entrant généralement employés dans les formulations de ce domaine.

Ainsi, elles comprennent habituellement des tensioactifs dont le rôle peut être de stabiliser une émulsion, une suspension, ou une suspo-émulsion, de favoriser la dispersion de la matière active, d'en favoriser le mouillage avec d'autres constituants de la formulation.

Lesdits tensioactifs peuvent être ioniques ou non.

La quantité de tensioactif mise en oeuvre dépend de la forme de la formulation. L'homme de l'art peut la déterminer sans difficulté.

A titre de tensioactifs anioniques, on peut citer, sans intention de s'y limiter :
*les acides alkylsulfoniques, les acides arylsulfoniques*, éventuellement substitués par un ou plusieurs groupements hydrocarbonés, et dont la fonction acide est partiellement ou totalement salifiée, comme les acides alkylsulfoniques en C₈-C₅₀, plus particulièrement en C₈-C₃₀, de préférence en C₁₀-C₂₂, les acides benzènesulfoniques, les acides naphtalènesulfoniques, substitués par un à trois groupements alkyles en C₁-C₃₀, de préférence en C₄-C₁₆, et/ou alcényles en C₂-C₃₀, de préférence en C₄-C₁₆.
les mono- ou diesters d'acides alkylsulfosucciniques, dont la partie alkyle, linéaire ou ramifiée, éventuellement substituée par un ou plusieurs groupements hydroxylés et/ou alcoxylés, linéaires ou ramifiés en C₂-C₄ (de préférence éthoxylés, propoxylés, éthopropoxylés).
*les esters phosphates* choisis plus particulièrement parmi ceux comprenant au moins un groupement hydrocarboné saturé, insaturé ou aromatique, linéaire ou ramifié, comprenant 8 à 40 atomes de carbone, de préférence 10 à 30, éventuellement substitués par au moins un groupement alcoxylé (éthoxylé, propoxylé, éthopropoxylé). En outre, ils comprennent au moins un groupe ester phosphate, mono- ou diestérifié de telle sorte que l'on puisse avoir un ou deux groupes acides libres ou partiellement ou totalement salifiés. Les esters phosphates préférés sont du type des mono- et diesters de l'acide phosphorique et de mono-, di- ou tristyrylphénol alcoxylé (éthoxylé et/ou propoxylé), ou de mono-, di- ou trialkylphénol alcoxylé (éthoxylé et/ou propoxylé), éventuellement substitué par un à quatre groupements alkyles ; de l'acide phosphorique et d'un alcool en C₈-C₃₀, de préférence en C₁₀-C₂₂ alcoxylé (éthoxylé ou éthopropoxylé); de l'acide phosphorique et d'un alcool en C₈-C₂₂, de préférence en C₁₀-C₂₂, non alcoxylé.
*Les esters sulfates* obtenus à partir d'alcools saturés, ou aromatiques, éventuellement substitués par un ou plusieurs groupements alcoxylés (éthoxylés, propoxylés, éthopropoxylés), et pour lesquels les fonctions sulfates se présentent sous la forme acide libre, ou partiellement ou totalement neutralisées. A titre d'exemple, on peut citer les esters sulfates obtenus plus particulièrement à partir d'alcools en C₈-C₂₀, saturés ou insaturés, pouvant comprendre 1 à 8 motifs alcoxylés (éthoxylés, propoxylés, éthopropoxylés) ; les esters sulfates obtenus à partir de phénol polyalcoxylé, substitués par 1 à 3 groupements hydroxycarbonés en C₂-C₃₀, saturés ou insaturés, et dans lesquels le nombre de motifs alcoxylés est compris entre 2 et 40 ; les esters sulfates obtenus à partir de mono-, di- ou tristyrylphénol polyalcoxylés dans lesquels le nombre de motifs alcoxylés varie de 2 à 40.

Il est à noter que dans les cas où les composés sont sous une forme partiellement ou totalement salifiée, le contre-ion peut être un métal alcalin, tel que le sodium ou le potassium, ou encore un ion ammonium de formule N(R)₄⁺ dans laquelle R, identiques ou différents, représentent un atome d'hydrogène ou un radical alkyle en C₁-C₄ éventuellement substitué par un atome d'oxygène.

A titres de tensioactifs non ioniques, on peut citer à titre d'illustration non limitative :
les phénols polyalcoxylés (éthoxylés, propoxylés, éthopropoxylés) substitués par au moins un radical alkyle en C₄-C₂₀, de préférence en C₄-C₁₂, ou substitués par au moins un radical alkylaryle dont la partie alkyle est en C₁-C₆. Plus particulièrement, le nombre total de motifs alcoxylés est compris entre 2 et 100. A titre d'exemple, on peut citer les mono-, di- ou tri (phényléthyl) phénols polyalcoxylés, ou les nonylphénols polyalcoxylés.
les alcools ou les acides gras en C₆-C₂₂, éventuellement polyalcoxylés (éthoxylés, propoxylés, éthopropoxylés). Dans le cas où ils sont présents, le nombre des motifs alcoxylés est compris entre 1 et 60. Le terme acide gras éthoxylé inclut aussi bien les produits obtenus par éthoxylation d'un acide gras par l'oxyde d'éthylène que ceux obtenus par estérification d'un acide gras par un polyéthylèneglycol.
les triglycérides polyalcoxylés (éthoxylés, propoxylés, éthopropoxylés) d'origine végétale ou animale. Ainsi conviennent les triglycérides issus du saindoux, du suif, de l'huile d'arachide, de l'huile de beurre, de l'huile de graine de coton, de l'huile de lin, de l'huile d'olive, de l'huile de palme, de l'huile de pépins de raisin, de l'huile de poisson, de l'huile de soja, de l'huile de ricin, de l'huile de colza, de l'huile de coprah, de l'huile de noix de coco, et comprenant un nombre total de motifs alcoxylés compris entre 1 et 60. Le terme triglycéride éthoxylé vise aussi bien les produits obtenus par éthoxylation d'un triglycéride par l'oxyde d'éthylène que ceux obtenus par trans-estérification d'un triglycéride par un polyéthylèneglycol.
les esters de sorbitan polyalcoxylés (éthoxylés, propoxylés, éthopropoxylés), plus particulièrement les esters de sorbitol cydisé d'acides gras de C₁₀ à C₂₀ comme l'acide laurique, l'acide stéarique ou l'acide oléique, et comprenant un nombre total de motifs alcoxylés compris entre 2 et 50.

Les formulations peuvent comprendre d'autres additifs classiques dans le domaine, qui peuvent avoir, entre autres propriétés, des rôles d'agents mouillants, dispersants, désintégrants, liants, antimottants et/ou stabilisants.

La quantité en ces composés varie dans une large gamme et dépend, là encore, de la mise en forme de la formulation.

Parmi de tels composés, on peut mentionner entre autres, les sels de métaux alcalins ou d'ammonium d'alkylnaphtalène sulfonates condensés au formol ; les sels de métaux alcalins ou d'ammonium de 4,4'-dihydroxybiphénylsulfonate condensés au formol ; les sels de métaux alcalins ou d'ammonium d'alkylarylphosphates ou d'alkylarylsulfates, comme les mono-, di- ou tri-styrylphénols polyoxyéthylénés et/ou polyoxypropylénés, phosphatés ou sulfatés, neutralisés ou non et leurs mélanges. Il est à noter qu'ammonium représente N(R)₄⁺, avec R, identiques ou différents, représentant des atomes d'hydrogène, ou des radicaux hydrocarbonés en C₁-C₄.

Conviennent aussi les sels de métaux alcalins ou d'ammonium, de polymères comprenant au moins un monomère choisi parmi les acides, les diacides ou les anhydrides insaturés en C₃-C₅, éventuellement combinés à au moins un monomère choisi parmi les radicaux hydrocarbonés, insaturés, linéaires ou ramifiés en C₄-C₈.

Plus particulièrement, on peut utiliser des polymères comprenant en tant que monomères, l'acide maléique, l'anhydride maléique, l'acide acrylique, l'acide méthacrylique, seuls ou en mélanges. Lesdits polymères peuvent de même comprendre au moins un monomère choisi parmi l'isobutylène ou le diisobutylène.

Ce polymère peut se trouver sous une forme acide ou bien sous une forme de sel de métal alcalin ou d'ammonium. De préférence, le copolymère se trouve sous forme de sels de sodium. De préférence, on met en oeuvre un polymère comprenant de l'acide maléique, et/ou l'anhydride maléique combiné(s) avec l'isobutylène et/ou le diisobutylène. La répartition des monomères est alternante dans la molécule. De préférence, la proportion du monomère de type acide/anhydride par rapport au monomère de type hydrocarboné est de 50/50.

Il est fait remarquer que les tensioactifs et agents qui viennent d'être cités sont différents des composés entrant dans la formulation en tant qu'agent anti-lessivage. En effet, les premiers ne présentent pas une masse moléculaire aussi élevée que celle des composés anti-rebond mis en oeuvre dans l'invention.

En tant qu'agent anti-mottant peuvent convenir, les phosphates d'ammonium ou de sodium, le carbonate ou bicarbonate de sodium, l'acétate de sodium, le métasilicate de sodium, les sulfates de magnésium, zinc ou calcium, l'hydroxyde de magnésium, le chlorure de calcium, les tamis moléculaires, les oxydes de baryum ou de calcium, la silice, seuls ou en mélange.

Parmi les stabilisants chimiques, on peut citer sans intention de s'y limiter les sulfates de métaux alcalino-terreux ou de transition, l'hexamétaphosphate de sodium, le chlorure de calcium, l'anhydride borique, seuls ou en mélange.

Les formulations peuvent, si nécessaire, comprendre une ou plusieurs charges inertes, telles que les argiles, les silices synthétiques et de diatomées, les silicates de calcium ou magnésium, le dioxyde de titane, les oxydes d'aluminium, zinc ou calcium, les carbonates de calcium ou de magnésium, les sulfates de sodium, ammonium, calcium, le noir de carbone, seuls ou en mélange.

La quantité de charge, si elles sont présentes, peut être déterminée sans difficulté par l'homme du métier.

La préparation des formulations phytosanitaires ne comprenant pas l'agent anti-lessivage, est réalisée de manière classique dans le domaine.

Ainsi, dans le cas où les formulations se trouvent sous la forme de solutions, suspensions, émulsions, on procède en mettant en contact les éléments constitutifs de la formulation, y compris, si nécessaire, des additifs classiques aidant à la formulation, comme par exemple les agents anti-mousses (par exemple, les substances silicones).

L'opération est généralement réalisée sous agitation à une température voisine de la température ambiante.

Dans le cas où la formulation se présente sous une forme de poudre, une étape de séchage est réalisée après celle de mise en contact des divers éléments constitutifs de la formulation.

Le séchage a lieu en mettant en oeuvre des moyens classiques. Ce qui a été décrit auparavant ne sera pas repris ici.

Dans le cas où la formulation phytosanitaire se trouve sous une forme solide, on procède en général en mélangeant les divers éléments constitutifs de manière à obtenir un mélange solide ou pâteux. Ce mélange peut ensuite faire l'objet d'un séchage.

Enfin, si nécessaire, la formulation solide obtenue, peut être mise en forme par granulation et /ou extrusion, pour donner des granulés.

Des exemples concrets de l'invention vont maintenant être présentés.

### EXEMPLES

On prépare 50 g de mélanges dont la composition est résumée dans le tableau ci-dessous :

| **Exemple** | **1(témoin)** | **2** | **3** | **4(témoin)** | **5** | **6** |
|---|---|---|---|---|---|---|
| Matière active (%) | 2 (1%) | 2 (1%) | 2 (1%) | 1 (1%) | 1 (1%) | 1 (1%) |
| Guar (a) | 0,1 % | 0,1 % | 0,1 % | 0 | 0 | 0 |
| HP guar (b) | 0 | 0 | 0 | 0,1 % | 0,1 % | 0,1 % |
| Lactate Zr (c) | 0 | 0,044 % | 0,044% | 0 | 0,044 % | 0,044 % |
| CaCl₂ (d) | 0 | 0 | 0,333 % | 0 | 0 | 0,333 % |

| | | | | | | |
|---|---|---|---|---|---|---|
| (a) : Guar : Meyprogat ® 60 (masse molaire moyenne 500000 g/mol - commercialisé par Rhodia Meyhall) mis en solution à 1 % dans l'eau ayant un pH ajusté à 5 avec HCl (1 M). | | | | | | |
| (b) : HP guar : hydroxpropyl guar Jaguar ®105 (masse molaire moyenne 500000 g/mol-commercialisé par Rhodia Meyhall) mis en solution à 1% dans l'eau ayant un pH ajusté à 5 avec HCl (1 M). | | | | | | |
| (c) : Lactate Zr : solution à 29,7 % de lactate de zirconium - Rhodoline® RHPN (commercialisé par Rhodia Chimie). Le pH est ajusté à 5 avec ajout d'acide chlorhydrique (1 M). Après ajustement du pH, la teneur en matières sèches est de 15,4%. | | | | | | |
| (d) La dureté de l'eau est simulée par un ajout d'ions Ca²⁺ équivalent à 300 ppm de CaCO₃ : on dissout 0,17g de CaCl₂ dans 9,83g d'eau. Ce mélange est substitué à 10g d'eau épurée. NB : les pourcentages dans le tableau correspondent au poids de matière sèche. | | | | | | |

Les formules 1 et 2 sont les suivantes :

| **1** | **%** | **2** | **%** |
|---|---|---|---|
| Mancozeb (fongicide) | 80 | Bouillie bordelaise | 77 |
| Borresperse (Borregard) (*) | 8 | Borresperse (Borregard) (*) | 12 |
| Supragil MNS/90 (Rhodia) (**) | 2 | Supragil MNS/90 (Rhodia) (**) | 5 |
| Geropon SDS (Rhodia) (***) | 2 | Rhodacal DS/10 (Rhodia) (****) | 2 |
| Argirec B/24 (BMP argile) | 8 | Prussian Blue | 2 |
| | | Bevaloid 6352DD (Bevaloid) | 2 |

| | | | |
|---|---|---|---|
| (*) Lignosulfonate de Na | | | |
| (**) méthyl naphtalène condensé | | | |
| (***) Dioctylsulfosuccinate de Na | | | |
| (****) Dodecylbezenesulfonate de Na | | | |

Les divers éléments constitutifs sont mélangés dans l'ordre suivant sous agitation magnétique : eau (ou eau + ions calcium), polymère, matière active puis réticulant.

On obtient une dispersion homogène, d'aspect identique à celui d'une préparation de matière active diluée dans de l'eau.

Les mélanges sont séchés 24 heures dans une étuve ventilée à 50°C dans des coupelles en aluminium.

On prélève une partie du film sec, que l'on pèse, que puis l'on plonge dans 300 ml d'eau épurée (représentant l'eau de pluie) et on laisse sous agitation (table agitante HEIDOLPH Promax 2020, vitesse 3,5) pendant 30 heures.

On mesure l'absorbance du liquide dans lequel baigne le film avec un turbidimètre METROHM Photometer 662 à la longueur d'onde = 630 nm. L'appareil est calibré avec de l'eau épurée (absorbance = 0).

Les résultats sont les suivants :

| Exemple | 1 (témoin) | 2 | 3 | 4 (témoin) | 5 | 6 |
|---|---|---|---|---|---|---|
| Absorbance | 7,6 | 0,6 | 0,4 | 8,5 | 0,4 | 0,8 |

La valeur de l'absorbance des échantillons est divisée par la masse de film sec introduite dans chaque récipient (afin de corriger les variations de concentration).

## Revendications

1. Utilisation, dans une bouillie aqueuse de pulvérisation comprenant une formulation phytosanitaire, d'un agent anti-lessivage comprenant :
• au moins un polymère ou copolymère polyhydroxylé et/ou polycarboxylé,
• au moins un agent réticulant comprenant au moins un métal choisi parmi les colonnes IVA, IB et IIIB de la classification périodique des éléments,
le rapport pondéral de l'agent réticulant et du polymère ou copolymère est compris entre 0,005 et 2 ; et
ledit agent anti-lessivage se présentant, dans la bouillie aqueuse de pulvérisation, sous la forme d'une solution ou d'une dispersion aqueuse présentant une concentration en polymère ou copolymère telle, que la viscosité de l'agent anti-lessivage est inférieure ou égale à 10 fois la viscosité d'une solution aqueuse en polymère ou copolymère exempte d'agent réticulant, présentant la même concentration.

2. Utilisation selon la revendication précédente, **caractérisée en ce que** le polymère ou copolymère polyhydroxylé est choisi parmi les polysaccharides d'origine animale, végétale ou bactérienne, les dérivés de la celluose, ou encore l'alcool polyvinylique, les alcools polyphénoliques, ou leurs dérivés, ainsi que les dérivés polyoxyalkylénés du glycol.

3. Utilisation selon la revendication précédente, **caractérisée en ce que** le polymère ou copolymère polyhydroxylé est choisi parmi la gomme de guar, ainsi que ses dérivés non ioniques, anioniques, cationiques ou amphotériques.

4. Utilisation selon la revendication précédente, **caractérisée en ce que** le polymère ou copolymère est choisi parmi le guar, les dérivés alkylés du guar ; les hydroxyalkyl guars pour lesquels le radical alkyle comprend 2 à 4 atomes de carbone, linéaire ou ramifié ; le carboxyméthyl guar ; les carboxyméthyl hydroxyalkyl guar, pour lesquels le radical alkyle comprend 2 à 4 atomes de carbone, linéaire ou ramifié.

5. Utilisation selon l'une quelconque des revendications précédentes, **caractérisée en ce que** le polymère ou copolymère polycarboxylés, est choisi parmi ceux obtenus à partir :
□ d'au moins un monomère saturé ou insaturé, comprenant 3 à 10 atomes de carbone et comprenant un ou plusieurs groupements carboxyliques se trouvant sous une forme d'acide, de sels de métal alcalin,
□ éventuellement combiné à au moins un monomère hydrocarboné portant une ou plusieurs insaturations éthyléniques ; ou
□ éventuellement combiné à au moins un monomère de type oxyde d'alkylène.

6. Utilisation selon l'une quelconque des revendications précédentes, **caractérisée en ce que** le polymère ou copolymère présente une masse moléculaire comprise entre 104 et 5.10⁶ g/mol.

7. Utilisation selon l'une quelconque des revendications précédentes, **caractérisée en ce que** l'agent réticulant est un composé hydrosoluble, hydrodispersable ou émulsionnable se trouvant sous la forme :
• de dérivés organiques choisis parmi :
les sels d'acides carboxyliques, aliphatiques, saturés ou non, linéaires ou ramifiés, comprenant 2 à 18 atomes de carbone, et comprenant éventuellement un ou plusieurs groupements hydroxyles ;
les chélates de β-dicétones ou de β-cétoesters aliphatiques comprenant 5 à 10 atomes de carbone et/ou comprenant au moins un radical aromatique ;
• de dérivés minéraux choisis parmi les oxydes, hydroxydes, ou leurs mélanges.

8. Utilisation selon l'une quelconque des revendications précédentes, **caractérisée en ce que** l'agent réticulant comprend au moins un métal choisi parmi le zirconium, le titane, le cuivre et l'aluminium.

9. Utilisation selon l'une quelconque des revendications précédentes, **caractérisée en ce que** le rapport pondéral de l'agent réticulant et du polymère ou copolymère est compris entre 0,01 et 0,5.

10. Utilisation selon l'une quelconque des revendications précédentes, **caractérisée en ce que** la bouillie aqueuse de pulvérisation est obtenue en mélangeant la formulation phytosanitaire diluée, émulsionnée ou dispersée dans un milieu aqueux, à l'agent anti-lessivage se présentant sous une forme solide ou sous la forme d'une dispersion dans un composé qui n'est pas un solvant du polymère ou copolymère ; la quantité d'eau dans la formulation phytosanitaire étant telle que l'agent anti-lessivage se présente, dans la bouillie de pulvérisation, sous la forme d'une solution ou d'une dispersion aqueuse présentant une concentration en polymère ou copolymère telle, que la viscosité de l'agent anti-lessivage est inférieure ou égale à 10 fois la viscosité d'une solution aqueuse en polymère ou copolymère exempte d'agent réticulant, présentant la même concentration.

11. Utilisation selon la revendication précédente, caractérisée en ce le composé qui n'est pas un solvant du polymère ou copolymère est choisi parmi les huiles d'origine animale, végétale, ou des esters d'acides gras, les huiles hydrocarbonées.

12. Utilisation selon l'une des revendications 10 ou 11, **caractérisé en ce que** la teneur en composé qui n'est pas un solvant du copolymère représente au moins 50 % en poids de l'agent anti-lessivage.

13. Utilisation selon l'une quelconque des revendications 1 à 9, **caractérisée en ce que** la bouillie aqueuse de pulvérisation est obtenue en mélangeant la formulation phytosanitaire à l'agent anti-lessivage se présentant sous la forme d'une solution ou d'une dispersion aqueuse présentant une concentration en polymère ou copolymère telle, que la viscosité de l'agent anti-lessivage est inférieure ou égale à 10 fois la viscosité d'une solution aqueuse en polymère ou copolymère exempte d'agent réticulant, présentant la même concentration.

14. Utilisation selon la revendication précédente, **caractérisée en ce que** la formulation phytosanitaire mise en oeuvre se présente sous une forme diluée, émulsionnée ou dispersée dans un milieu aqueux.

15. Utilisation selon l'une quelconque des revendications 1 à 9, **caractérisée en ce que** la bouillie de pulvérisation est obtenue en diluant dans un milieu aqueux, la formulation phytosanitaire exempte d'eau et comprenant l'agent anti-lessivage sous forme solide ou sous la forme d'une dispersion dans un composé qui n'est pas un solvant du polymère ou copolymère ; la quantité d'eau étant telle que l'agent anti-lessivage, dans la bouillie de pulvérisation, se présente sous la forme d'une solution ou d'une dispersion aqueuse présentant une concentration en polymère ou copolymère telle, que la viscosité de l'agent anti-lessivage est inférieure ou égale à 10 fois la viscosité d'une solution aqueuse en polymère ou copolymère exempte d'agent réticulant, présentant la même concentration.

16. Utilisation selon la revendication précédente, **caractérisée en ce que** la formulation phytosanitaire se présente sous forme solide comprenant l'agent anti-lessivage sous forme solide.

17. Utilisation selon l'une quelconque des revendications précédentes, **caractérisée en ce que** la teneur en matière active phytosanitaire présente dans la formulation phytosanitaire est telle que le rapport pondéral de ladite matière active à l'agent anti-lessivage est de 0,1 à 50 %.

## Claims

1. Use, in an aqueous atomizing spray comprising a phytosanitary formulation, of an anti-leaching agent comprising:
• at least one polyhydroxylated and/or polycarboxylated polymer or copolymer,
• at least one reticulating agent comprising at least one metal selected throughout from Columns IVA, IB and IIIB of the periodic table of the elements,
the weight ratio of the reticulating agent and the polymer or copolymer being between 0.005 and 2, and
said anti-leaching agents being present, in the aqueous atomizing spray, in the form of an aqueous solution or dispersion having a polymer or copolymer concentration such that the viscosity of the anti-leaching agent is less than or equal to 10 times the viscosity of an aqueous polymer or copolymer solution free from reticulating agent, having the same concentration.

2. Use according to the previous claim, **characterized in that** the polyhydroxylated polymer or copolymer is selected throughout from polysaccharides of animal, plant or bacterial origin, cellulose derivatives, or polyvinyl alcohol, the polyphenolic alcohols or their derivatives, and the polyoxyalkylenated derivatives of glycol.

3. Use according to the previous claim, **characterized in that** the polyhydroxylated polymer or copolymer is selected throughout from guar gum and its non-ionic, anionic, cationic or amphoteric derivatives.

4. Use according to the previous claim, **characterized in that** the polymer or copolymer is selected throughout from guar and alkylated derivatives of guar; hydroxyalkyl guar for which the alkyl radical comprises 2 to 4 carbon atoms, and is linear or branched; carboxymethyl guar, carboxymethyl hydroxyalkyl guar, for which the alkyl radical comprises 2 to 4 carbon atoms, and is linear or branched.

5. Use according to any one of the previous claims, **characterized in that** the polycarboxylated polymer or copolymer is selected throughout from those obtained from:
• at least one saturated or non-saturated monomer comprising 3 to 10 carbon atoms and comprising one or more carboxylic groups present in the form of an acid, or of alkaline metal salts.
• optionally combined with at least one hydrocarbonated monomer carrying one or more ethylenic non-saturations; or
• optionally combined with at least one alkylene oxide-type monomer.

6. Use according to any one of the previous claims, **characterized in that** the polymer or copolymer has a molecular mass between 10⁴ and 5.10⁶ g/mol.

7. Use according to any one of the previous claims, **characterized in that** the reticulating agent is a water-soluble, water-dispersible or emulsifiable compound found in the form of:
• organic derivatives selected throughout from:
linear or branched, saturated or non-saturated, aliphatic, carboxylic acid salts, comprising 2 to 18 carbon atoms, and optionally comprising one or more hydroxyl groups;
aliphatic β-diketone or β-ketoester chelates, comprising 5 to 10 carbon atoms and/or comprising at least one aromatic radical;
• mineral derivatives selected throughout from the oxides, hydroxides, or mixtures of these.

8. Use according to any one of the previous claims, **characterized in that** the reticulating agent comprises at least one metal selected throughout from zirconium, titanium, copper and aluminium.

9. Use according to any one of the previous claims, **characterized in that** the weight ratio of the reticulating agent and the polymer or copolymer is between 0.01 and 0.5.

10. Use according to any one of the previous claims, **characterized in that** the aqueous atomizing spray is obtained by mixing the phytosanitary formulation diluted, emulsified or dispersed in an aqueous medium, with the anti-leaching agent which is present in solid form, or in the form of a dispersion in a compound which is not a solvent of the polymer or copolymer; the quantity of water in the phytosanitary formulation being such that the anti-leaching agent is present, in the atomizing spray, in the form of an aqueous solution or dispersion having a polymer or copolymer concentration such that the viscosity of the anti-leaching agent is less than or equal to 10 times the viscosity of an aqueous polymer or copolymer solution free from reticulating agent, having the same concentration.

11. Use according to any one of the previous claims, **characterized in that** the compound which is not a solvent of the polymer or copolymer is selected throughout from oils of animal or vegetable origin, or esters of fatty acids, or hydrocarbonated oils.

12. Use according to either of Claims 10 or 11, **characterized in that** the content of the compound which is not a solvent of the copolymer represents at least 50% by weight of the anti-leaching agent.

13. Use according to any one of Claims 1 to 9, **characterized in that** the aqueous atomizing spray is obtained by mixing the phytosanitary formulation with the anti-leaching agent which is present in the form of an aqueous solution or dispersion having a polymer or copolymer concentration such that the viscosity of the anti-leaching agent is less than or equal to 10 times the viscosity of an aqueous polymer or copolymer solution free from reticulating agent, having the same concentration.

14. Use according to the previous claim, **characterized in that** the phytosanitary formulation utilized is present in a diluted, emulsified or dispersed form in an aqueous medium.

15. Use according to any one of Claims 1 to 9, **characterized in that** the aqueous atomizing spray is obtained by diluting, in an aqueous medium, the phytosanitary formulation which is free from water and contains the anti-leaching agent in solid form or in the form of a dispersion in a compound which is not a solvent of the polymer or copolymer; the quantity of water being such that the anti-leaching agent, in the atomizing spray, is present in the form of an aqueous solution or dispersion, having a polymer or copolymer concentration such that the viscosity of the anti-leaching agent is less than or equal to 10 times the viscosity of an aqueous polymer or copolymer solution free from reticulating agent, having the same concentration.

16. Use according to the previous claim, **characterized in that** the phytosanitary formulation is present in solid form, containing the anti-leaching agent in solid form.

17. Use according to any one of the previous claims, **characterized in that** the content of phytosanitary active ingredient present in the phytosanitary formulation is such that the weight ratio of said active ingredient to anti-leaching agent is 0.1 to 50%.

## Patentansprüche

1. Verwendung eines Anti-Auslaugmittels in einer wäßrigen Spritzbrühe zum Versprühen, die eine Pflanzenschutzformulierung enthält, wobei das Anti-Auslaugmittel umfaßt:
• mindestens ein polyhydroxyliertes und/oder polycarboxyliertes Polymer oder Copolymer,
• mindestens ein Vernetzungsmittel, umfassend mindestens ein Metall, ausgewählt unter den Gruppen IVA, IB und IIIB des Periodensystems der Elemente,
wobei das Gewichtsverhältnis des Vernetzungsmittels und des Polymers oder Copolymers zwischen 0,005 und 2 beträgt; und
das genannte Anti-Auslaugmittel in der wäßrigen Spritzbrühe zum Versprühen in Form einer wäßrigen Lösung oder Dispersion vorliegt, die eine solche Konzentration an Polymer oder Copolymer aufweist, daß die Viskosität des Anti-Auslaugmittels unterhalb oder gleich dem Zehnfachen der Viskosität einer wäßrigen Lösung von Polymer oder Copolymer beträgt, die frei von Vernetzungsmittel ist und die die gleiche Konzentration aufweist.

2. Verwendung nach dem vorstehenden Anspruch, **dadurch gekennzeichnet, daß** das polyhydroxylierte Polymer oder Copolymer unter den Polysacchariden tierischen, pflanzlichen oder bakteriellen Ursprungs, den Cellulosederivaten, oder auch dem Polyvinylalkohol, den polyphenolischen Alkoholen oder ihren Derivaten sowie den polyoxyalkylenischen Derivaten des Glycols ausgewählt wird.

3. Verwendung nach dem vorstehenden Anspruch, **dadurch gekennzeichnet, daß** das polyhydroxylierte Polymer oder Copolymer unter Guar-Gummi sowie seinen nichtionischen, anionischen, kationischen oder amphoteren Derivaten ausgewählt wird.

4. Verwendung nach dem vorstehenden Anspruch, **dadurch gekennzeichnet, daß** das Polymer oder Copolymer unter Guar, den alkylierten Derivaten von Guar; den Hydroxyalkyl-Guaren, bei denen der lineare oder verzweigte Rest Alkyl 2 bis 4 Kohlenstoffatome umfaßt; dem Carboxymethyl-Guar; den Carboxymethyl-hydroxyalkyl-Guaren, bei denen der lineare oder verzweigte Rest Alkyl 2 bis 4 Kohlenstoffatome umfaßt, ausgewählt wird.

5. Verwendung nach irgendeinem der vorstehenden Ansprüche, **dadurch gekennzeichnet, daß** das polycarboxylierte Polymer oder Copolymer unter denen ausgewählt wird, die erhalten werden ausgehend von:
• mindestens einem gesättigten oder ungesättigten Monomer mit 3 bis 10 Kohlenstoffatomen und umfassend eine oder mehrere Carboxylgruppen, die in Form von Säure oder in Form von Alkalimetallsalzen vorliegen,
• gegebenenfalls kombiniert mit mindestens einem Kohlenwasserstoff-Monomer, das eine oder mehrere ethylenische Nichtsättigungen trägt; oder
• gegebenenfalls kombiniert mit mindestens einem Monomer vom Typ Alkylenoxid.

6. Verwendung nach irgendeinem der vorstehenden Ansprüche, **dadurch gekennzeichnet, daß** das Polymer oder Copolymer eine Molekularmasse zwischen 10⁴ und 5.10⁶ g/mol aufweist.

7. Verwendung nach irgendeinem der vorstehenden Ansprüche, **dadurch gekennzeichnet, daß** das Vernetzungsmittel eine wasserlösliche, wasserdispergierbare oder emulgierbare Verbindung ist, die vorliegt in Form von:
• organischen Derivaten, ausgewählt unter:
den Salzen von aliphatischen, gesättigten oder ungesättigten, linearen oder verzweigten Carbonsäuren mit 2 bis 18 Kohlenstoffatomen und gegebenenfalls umfassend eine oder mehrere Hydroxylgruppen,
den Chelaten von aliphatischen β-Diketonen oder β-Ketoestern mit 5 bis 10 Kohlenstoffatomen und/oder umfassend mindestens einen aromatischen Rest;
• mineralischen Derivaten, ausgewählt unter den Oxiden, den Hydroxiden oder ihren Mischungen.

8. Verwendung nach irgendeinem der vorstehenden Ansprüche, **dadurch gekennzeichnet, daß** das Vernetzungsmittel mindestens ein Metall umfaßt, ausgewählt unter Zirkonium, Titan, Kupfer und Aluminium.

9. Verwendung nach irgendeinem der vorstehenden Ansprüche, **dadurch gekennzeichnet, daß** das Gewichtsverhältnis des Vernetzungsmittels und des Polymers oder Copolymers zwischen 0,01 und 0,5 beträgt.

10. Verwendung nach irgendeinem der vorstehenden Ansprüche, **dadurch gekennzeichnet, daß** die wäßrige Spritzbrühe zum Versprühen durch Vermischen der in einem wäßrigen Medium verdünnten, emulgierten oder dispergierten Pflanzenschutzformulierung mit dem Anti-Auslaugmittel erhalten wird, das in einer festen Form oder in Form einer Dispersion in einer Verbindung vorliegt, die nicht ein Lösungsmittel für das Polymer oder das Copolymer ist; wobei die Wassermenge in der Pflanzenschutzformulierung derart ist, daß das Anti-Auslaugmittel in der Spritzbrühe zum Versprühen in Form einer wäßrigen Lösung oder Dispersion vorliegt, die eine solche Konzentration an Polymer oder Copolymer aufweist, daß die viskosität des Anti-Auslaugmittels unterhalb oder gleich dem Zehnfachen der Viskosität einer wäßrigen Lösung von Polymer oder Copolymer beträgt, die frei von Vernetzungsmittel ist und die die gleiche Konzentration aufweist.

11. Verwendung nach dem vorstehenden Anspruch, **dadurch gekennzeichnet, daß** die Verbindung, die nicht ein Lösungsmittel für das Polymer oder das Copolymer ist, unter den Ölen tierischen oder pflanzlichen Ursprungs oder den Fettsäureestern, den Köhlenwasserstoff-Ölen ausgewählt wird.

12. Verwendung nach einem der Ansprüche 10 oder 11, **dadurch gekennzeichnet, daß** der Gehalt an der Verbindung, die nicht ein Lösungsmittel für das Copolymer ist, mindestens 50 Gew.-% des Anti-Auslaugmittels darstellt.

13. Verwendung nach irgendeinem der Ansprüche 1 bis 9, **dadurch gekennzeichnet, daß** die wäßrige Spritzbrühe zum Versprühen durch Vermischen der Pflanzenschutzformulierung mit dem Anti-Auslaugmittel erhalten wird, das in Form einer wäßrigen Lösung oder Dispersion vorliegt, die eine solche Konzentration an Polymer oder Copolymer aufweist, daß die Viskosität des Anti-Auslaugmittels unterhalb oder gleich dem Zehnfachen der Viskosität einer wäßrigen Lösung von Polymer oder Copolymer beträgt, die frei von Vernetzungsmittel ist und die die gleiche Konzentration aufweist.

14. Verwendung nach dem vorstehenden Anspruch, **dadurch gekennzeichnet, daß** die eingesetzte Pflanzenschutzformulierung in verdünnter, emulgierter oder dispergierter Form in einem wäßrigen Medium vorliegt.

15. Verwendung nach irgendeinem der Ansprüche 1 bis 9, **dadurch gekennzeichnet, daß** die Spritzbrühe zum Versprühen durch Verdünnen in einem wäßrigen Medium der Pflanzenschutzformulierung erhalten wird, die frei von Wasser ist und das Anti-Auslaugmittel in fester Form oder in Form einer Dispersion in einer Verbindung umfaßt, die nicht ein Lösungsmittel für das Polymer oder das Copolymer ist; wobei die Wassermenge derart ist, daß das Anti-Auslaugmittel in der Spritzbrühe zum Versprühen in Form einer wäßrigen Lösung oder Dispersion vorliegt, die eine solche Konzentration an Polymer oder Copolymer aufweist, daß die Viskosität des Anti-Auslaugmittels unterhalb oder gleich dem Zehnfachen der Viskosität einer wäßrigen Lösung von Polymer oder Copolymer beträgt, die frei von Vernetzungsmittel ist und die die gleiche Konzentration aufweist.

16. Verwendung nach dem vorstehenden Anspruch, **dadurch gekennzeichnet, daß** die Pflanzenschutzformulierung in fester Form vorliegt, die das Anti-Auslaugmittel in fester Form umfaßt.

17. Verwendung nach irgendeinem der vorstehenden Ansprüche, **dadurch gekennzeichnet, daß** der in der Pflanzenschutzformulierung vorliegende Gehalt an Pflanzenschutz-Wirkstoff derart ist, daß das Gewichtsverhältnis des genannten Wirkstoffes zum Anti-Auslaugmittel 0,1 bis 50 % beträgt.
